# EUROPEAN PATENT APPLICATION

(11) **EP 1 318 618 A2**
(43) Date of publication of application: **11.06.2003**
(21) Application number: 02257651.6
(22) Date of filing: 05.11.2002
(51) Int. Cl.: H04B 7/08

(54) **Antenna beam control system**

(30) Priority: 10.12.2001 US 6381
(71) Applicant: TDK Corporation, Chuo-ku, Tokyo 103-8272 (JP)
(72) Inventor: Ikeda, Masaaki, Tokyo, 103-8272 (JP); Nakamura, Toshiba, Tokyo, 103-8272 (JP); Sato, Noriaki, Tokyo, 103-8272 (JP)
(74) Representative: Fenlon, Christine Lesley

(57) **Abstract**

In an antenna beam control system, in which four antenna elements (31-1∼31-4) are connected to respective first signal processing circuits (33-1∼33-4) to which phase shift circuits (35-1∼35-4) are connected respectively, output signals from the phase shift circuits are combined by a combiner (36), a combined signal is processed by a second signal processing circuit, and phase shift amounts in said phase shift circuits are controlled in accordance with strength information of the signal processed in the second signal processing circuit such that a strength of the signal becomes optimum, characterized in that five combinations of binary signals by means of which five antenna beam patterns (P₁-P₅) including four antenna beam patterns (P₁-P₄) each of which is obtained by setting a phase shift amount of respective one of at least four phase shift circuits corresponding to said at least four antenna elements to 180° and setting phase shift amounts of the remaining phase shift circuits to 0° and one antenna beam pattern which is obtained by setting phase shift amounts of all the phase shift circuits corresponding to said at least four antenna elements to 0° are stored, and phase shift amounts of said phase shift circuits are controlled by reading the five combinations of binary signals to find an optimum antenna beam pattern. The antenna beam control system becomes simple in construction, cheap in cost, and is easily realized by an IC chip.

## Description

The present invention relates to an antenna beam control system comprising a plurality of antenna elements receiving a modulated signal; a plurality of high frequency circuits each of which is connected to respective one of said plurality of antenna elements; a plurality of phase circuits each of which is connected to respective one of said plurality of high frequency circuits and controls a phase of a high frequency signal supplied from a high frequency circuit; a combiner for combining high frequency signals supplied from said plurality of phase circuits; a demodulation circuit for demodulating an output signal supplied from said combiner; and a control circuit for processing a demodulated signal supplied from said demodulation circuit to generate a control signal for controlling phases of said phase circuits such that a strength of the demodulated signal supplied from said demodulation circuit becomes optimum.

The above mentioned antenna beam control system may be applied not only to a receiving system for receiving a satellite television broadcasting signal and GPS system, but also to a transmitting and receiving device for a cellular phone system.

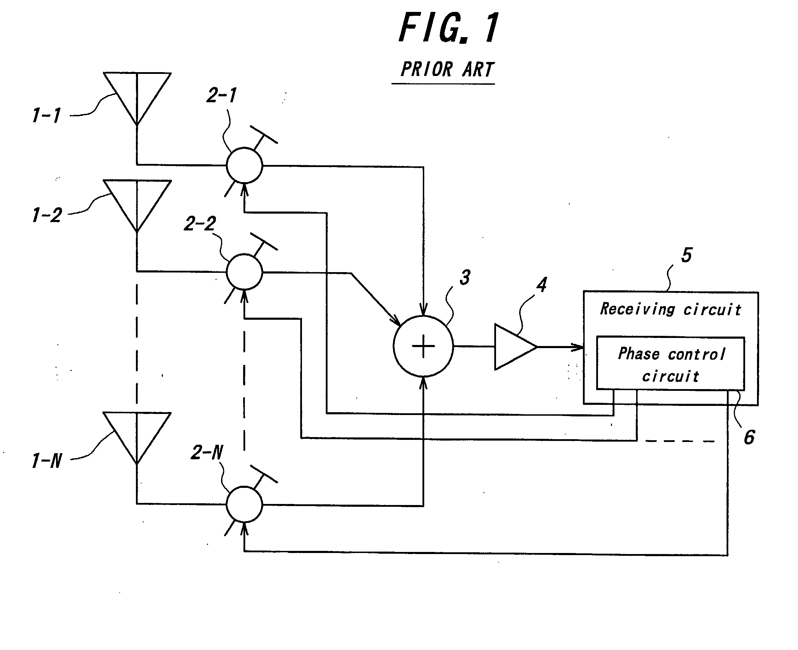

Fig. 1 shows a typical structure of a known phased array antenna. Signals received by N antenna elements 1-1∼1-N are supplied through phase shifters 2-1∼2-N, respectively to a combiner 3. A combined output signal from the combiner 3 is amplified by an amplifier 4, and then the amplified signal is supplied to a receiving circuit 5. The receiving circuit 5 includes a phase control circuit 6 which processes the amplified signal and generates phase control signals. Phase shift amounts in the phase shifters 2-1-2-N are controlled such that an amplitude of the output signal from the combiner 3 becomes maximum. If a frequency of the signal to be received by the antenna elements 1-1∼1-N is too high to utilize transistors, the phase shifters 2-1∼2-N are constructed by microstrip lines.

In the antenna beam control system mentioned above, the phase amounts of the phase shifters 2-1∼2-N are controlled by the phase control circuit 6 such that a strength of the received signal can be always kept maximum. However, the structure of the whole system is liable to be very complicated. Moreover, in high frequency applications, the phase shifters 2-1∼2-N have to be formed by microstrip lines, and therefore the phase shifters could not be constructed as a single IC chip together with a circuit portion including the combiner 3, amplifier 4 and phase control circuit 6.

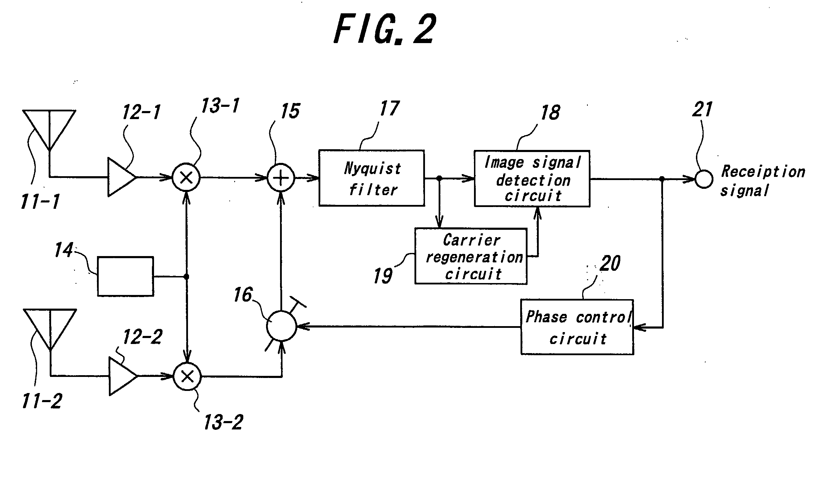

Fig. 2 illustrates a known antenna beam control system for use in a television receiver installed in an automobile. This known antenna beam control system is described in a Japanese Patent Application Laid-open Publication Hei 8-23484, in which high frequency signals received by two antenna elements 11-1 and 11-2 are amplified by low noise amplifiers 12-1 and 12-2, respectively, and then are supplied to mixers 13-1 and 13-2, respectively. A carrier signal having a given frequency allocated to a selected broadcasting station is also supplied to these mixers 13-1 and 13-2 from a local oscillator 14 to derive intermediate frequency signals.

The intermediate frequency signal from the mixer 13-1 is directly supplied to a combiner 15 and the intermediate frequency signal from the mixer 13-2 is supplied to the combiner 15 via a phase shifter 16. A combined signal obtained at the combiner 15 is then supplied, via a Nyquist filter 17 for correcting VSB (vestigial sideband amplitude modulation) characteristics, to an image signal detection circuit 18 as well as to a carrier regeneration circuit 19. In the image detection circuit 18, the detection of the image signal is carried out in accordance with a carrier generated by the carrier regeneration circuit 19. Furthermore, the image signal to be supplied from the image detection circuit 18 to an output terminal 21 is also supplied to a phase control circuit 20 to generate a phase control signal which is supplied to the phase shifter 16. The phase control circuit 20 is connected to a negative feedback circuit for phase and a phase amount of the phase shifter 16 is controlled such that a strength of the image signal generated from the image detection circuit 18 has always a maximum value.

In the known antenna beam control system shown in Fig. 2, the high frequency signals are converted into the intermediate frequency signals in the mixers 13-1 and 13-2 before combining the received signals at the combiner 15, and therefore it is no more necessary to construct the phase shifter 16 by a microstrip line like as the known antenna beam control system illustrated in Fig. 1 and the structure becomes simpler. However, the phase control circuit 20 connected to the negative feedback circuit for phase is still very complicated. Therefore, if a circuit portion including the combiner 15, phase shifter 16 and phase control circuit 20 is constructed as a single IC chip, it becomes rather complicated. In this manner, the IC chip is liable to be large and expensive.

In case of applying the antenna beam control system to an antenna system of a cellular phone which is strongly required to be small in size, light in weight and less expensive in cost, the above mentioned complicated and large antenna beam control system might cause fatal disadvantages.

Preferred embodiments of the present invention seek to provide a simple and cheap antenna beam control system, which can remove or mitigate the above mentioned drawbacks of the known antenna beam control systems, and is suitable to be constructed as a single IC chip.

The invention preferably provides an antenna beam control system, which can be advantageously used in a cellular phone which strongly requires to be small in size, light in weight and less expensive in cost.

According to the invention, an antenna beam control system comprises:
a plurality of antenna elements receiving a signal;
a plurality of first signal processing circuits each of which is connected to respective one of said plurality of antenna elements;
a plurality of phase shift circuits each of which is connected to respective one of said plurality of first signal processing circuits for controlling phases of signals supplied from said first signal processing circuits;
a combiner for combining signals supplied from said plurality of phase shift circuits;
a second signal processing circuit for processing an output signal supplied from said combiner; and
a phase control circuit for generating phase control signals for controlling phase shift amounts in said plurality of phase shift circuits in accordance with a strength of a signal processed in the second signal processing circuit such that an output signal from said combiner has a desired amplitude;
wherein at least four antenna elements are provided as said plurality of antenna elements, each of said plurality of the phase shift circuits includes a switching circuit for switching a phase of an input signal between 0° and 180°, and said phase control circuit generates said phase control signals for switching phases of input signals of said phase shift circuits between 0° and 180°.

In a preferable embodiment of the antenna beam control system according to the invention, said phase control circuit includes a memory circuit storing at least five combinations of binary control signals by means of which five antenna beam patterns including four antenna beam patterns each of which is obtained by setting a phase shift amount of respective one of at least four phase shift circuits corresponding to said at least four antenna elements to 180° and setting phase shift amounts of the remaining phase shift circuits to 0 ° and one antenna beam pattern which is obtained by setting phase shift amounts of all the phase shift circuits corresponding to said at least four antenna elements to 0°, and phase shift amounts of said phase shift circuits are controlled by reading the combinations of binary control signals stored in said memory circuit.

In this embodiment, the antenna beam scan may be carried out by reading successively said at least five combinations of binary control signals out of said memory circuit, a strength of a signal processed in said second signal processing circuit for respective one of said combinations of binary control signals is detected and stored, selecting a combination of binary control signals by means of which a strength of a signal processed in the second signal processing circuit becomes maximum, and controlling phase shift amounts in said phase shift circuits in accordance with the thus selected combination of binary control signals.

Alternatively, the antenna beam scan may be performed by reading said at least five combinations of binary control signals out of said memory circuit in a predetermined order, detecting a combination of binary control signals by means of which an antenna beam for obtaining a combined signal having a strength exceeding a predetermined level is obtained in accordance with strength information of a signal processed in the second signal processing circuit, and controlling phase shift amounts of the phase shift circuits in accordance with the thus detected combination of binary control signals.

The above mentioned antenna beam scan may be conducted such that the reading of said at least five combinations of binary control signals out of said memory circuit is initiated when a strength of the signal supplied from said combiner becomes lower than a predetermined level. Alternatively, the reading of the at least five combinations of binary control signals may be performed periodically with a predetermined time interval.

In a preferable embodiment of the antenna beam control system according to the present invention, said second signal processing circuit comprises an automatic gain control circuit, and the information of strength of the signal processed in the second signal processing circuit is derived as an automatic gain control voltage generated in said automatic gain control circuit. In this case, when a combination of binary control signals is read out of said memory circuit and phase shift amounts in the phase shift circuits are changed in accordance with the thus read out combination of binary signals, a strength of the signal processed in the second signal processing circuit is judged after a time period during which said automatic gain control voltage reaches a stable condition.

In another preferable embodiment of the antenna beam control system according to the invention, each of said phase shift circuits is constructed to generate both a signal whose phase is identical with that of the input signal and a signal whose phase is inverted by 180° with respect to the input signal, and said switching circuit is constructed to select one of said 0° phase-shifted signal and 180° phase-shifted signal generated from said phase shift circuit. In this case, each of said phase shift circuits may be constructed by a transistor circuit or CR circuit including resistors and capacitors.

In another preferable embodiment of the antenna beam control system according to the invention, said antenna elements receive a high frequency modulation signal, said first signal processing circuit comprises a mixer for converting high frequency modulation signals received by said antenna elements into intermediate frequency modulation signals, said intermediate frequency modulation signals being supplied to the phase shift circuits, and said second signal processing circuit comprises a demodulation circuit for demodulating the intermediate frequency modulation signal generated from said combiner. In this embodiment, the information of signal strength from which the phase control signals are generated may be derived from an automatic gain control signal generated in said demodulation circuit.

In still another embodiment of the antenna beam control system according to the invention, each of said plurality of antenna elements is connected to respective one of a plurality of branching filters or directional couplers, each of output terminals of the branching filters is connected to respective one of said first signal processing circuits, and each of reception signals generated by said first signal processing circuits is supplied to respective one of a plurality of receiving phase shift circuits. After distributing a transmission signal by a power distributor, a plurality of distributed transmission signals are supplied to a plurality of transmitting side phase shift circuits which correspond to said plurality of receiving side phase shift circuits and are controlled by same phase control signals as those for the receiving side phase shift circuits, output signals from these transmitting side phase shift circuits are supplied, via third signal processing circuits, to input terminals of said branching filters and are transmitted from said plurality of antenna elements. Such an antenna beam control system may be advantageously applied to a cellular phone terminal.

### Brief Description of the drawings

Fig. 1 is a block diagram showing a known phased array antenna;
Fig. 2 is a block diagram illustrating a known antenna beam control system used in a television receiver;
Fig. 3 is a block diagram depicting an embodiment of the antenna beam control system according to the invention;
Fig. 4 is a schematic view illustrating structure and arrangement of antenna elements and an antenna beam pattern of the embodiment;
Fig. 5 is a flow chart representing an embodiment of a method of scanning an antenna beam pattern;
Fig. 6 is a flow chart expressing another embodiment of the method of scanning the antenna beam pattern;
Fig.7 is a block diagram depicting a part of IC of phase shift circuits, combiner and switching circuit of the embodiment shown in Fig. 3;
Fig. 8 is a circuit diagram showing a detailed structure of the phase shift circuit shown in Fig. 7;
Fig. 9 is a circuit diagram showing a detailed structure of the combiner and switching circuit shown in Fig. 7;
Fig. 10 is a circuit diagram depicting a detailed structure of another embodiment of the phase shift circuit;
Fig. 11 is a block diagram showing a whole structure of an embodiment of the antenna beam control system according to the invention applied to a cellular phone terminal;
Fig. 12 is a diagram representing a simulation result of radiation pattern obtained by the four element patch array antenna shown in Fig. 4;
Fig. 13 is a diagram expressing a simulation result of radiation pattern of the four element patch array antenna;
Fig. 14 is a diagram showing a simulation result of radiation pattern of the four element patch array antenna;
Fig. 15 is a diagram representing a simulation result of radiation pattern of the four element patch array antenna; and
Fig. 16 is a diagram expressing a simulation result of radiation pattern of the four element patch array antenna.

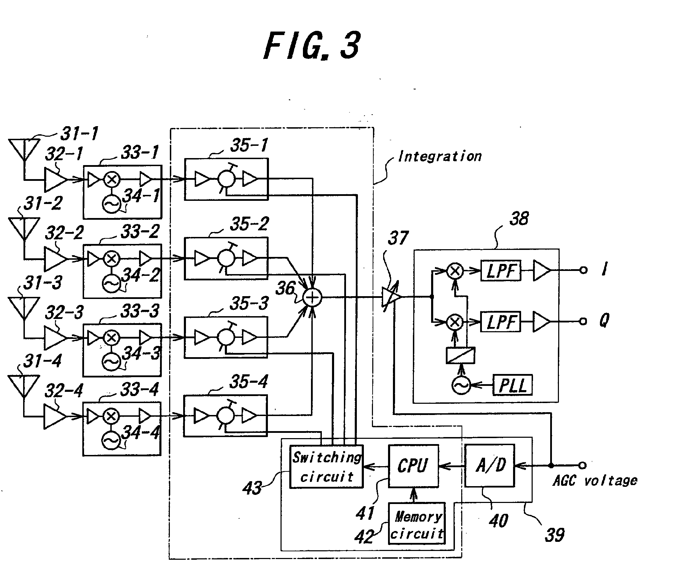

Fig. 3 is a block diagram showing an embodiment of the antenna beam control system according to the invention. In the present embodiment, there are provided four antenna elements 31-1∼31-4, and high frequency signals received by these antenna elements are amplified by low noise amplifiers 32-1∼32-4 and the amplified high frequency signals are then supplied to mixers 33-1∼33-4. To these mixers 33-1∼33-4 are also supplied carriers having a predetermined frequency from local oscillators 34-1∼34-4, respectively. Intermediate frequency signals generated from these mixers 33-1∼33-4 are supplied to phase shifters 35-1∼35-4, respectively. In the present embodiment each of the phase shifters 35-1∼35-4 is constructed such that a phase of an intermediate frequency signal is shifted by "0°" or "180°".

The intermediate frequency signals supplied from the phase shifters 35-1∼35-4 are combined by a combiner 36, a combined signal from the combiner is supplied to a variable gain amplifier 37, and a demodulated signal from the amplifier is supplied to an IQ mixer 38. The IQ mixer 38 generates I signal and Q signal, and may be a conventional one so that its detailed explanation is dispensed with.

In the variable gain amplifier 37, there is obtained an automatic gain control (AGC) signal. In the present embodiment, this AGC signal is utilized to generate, in a phase control circuit 39, a phase control signal for controlling phase shift amounts in the phase shifters 35-1∼35-4. In the phase control circuit 39, the ABC signal is applied to an A/D converter 40 and is converted into a digital signal. Then, this digital signal is supplied to a central processing unit (CPU) 41. In the CPU 41, it is judged weather or not a signal having a given strength is received in accordance with a level of the AGC signal. When it is judged that a signal having a given strength is not received, a phase control signal is generated on the basis of a table stored in a memory circuit 42 formed by ROM or RAM, and the thus generated phase control signal is supplied to a switching circuit 43, which serves to distribute the phase control signal to the phase shifters 35-1∼35-4 to control phase shift amounts in these phase shifters and to adjust the antenna beam such that a signal having given strength can be received.

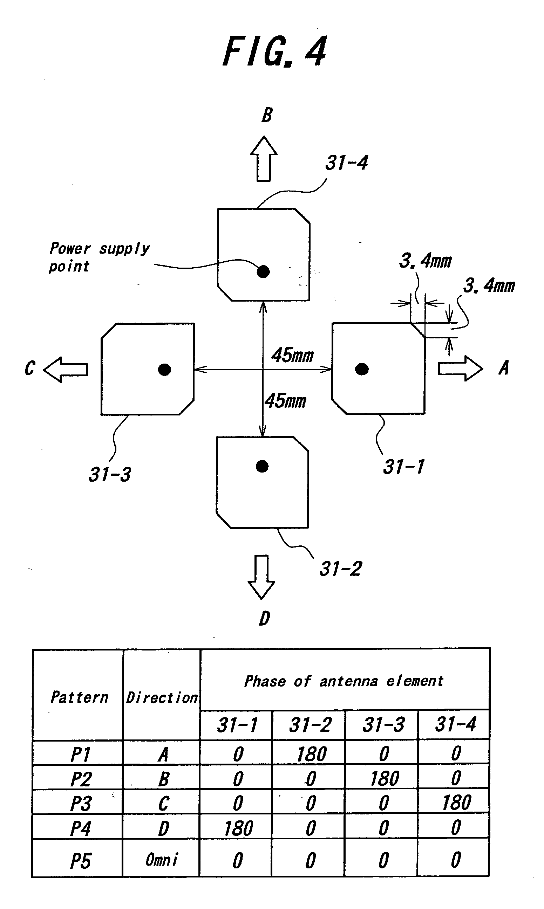

Fig. 4 is a schematic view showing a relationship between a direction of antenna beam by the antenna elements 31-1∼31-4 and the phase shift amounts in the phase shifters 35-1∼35-4. In the present embodiment, each of the four antenna elements 35-1∼35-4 of the circularly polarized patch array antenna is formed by a square metal plate of 30.3 mm x 30.3 mm whose two diagonally opposed corners being cut by a length of 3.4 mm, and these four square metal plates are arranged at apexes of a square such that diagonally opposed antenna elements are separated by a distance of 45 mm. By setting a phase shift amount of a phase shifter corresponding to any one of these antenna elements 31-1∼31-4 is set to 180° and a phase shift amount of the remaining three phase shifters is set to 0°, it is possible to direct the antenna beam to any desired direction in the horizontal plane. For instance, when a phase shift amount of the phase shifter 31-1 is set to 180° and a phase shift amount of the remaining three phase shifters 31-2-31-4 is set to 0°, a maximum sensitivity is obtained in a direction D and the antenna beam is directed in this direction D. When a phase shift amount for all the phase shifters 31-1∼31-4 is set to 0°, a so-called omni-direction characteristic is attained and the directionality of the antenna beam is almost lost. In the present embodiment, any one of these five antenna beam patterns is selected such that the reception signal has a given amplitude. It should be noted that it has been known to provide the directionality by controlling phases of the four elements circularly polarized patch array antenna, and has been described in detail in, Takeshi TSUJI et al., "Beam Switching Characteristic of Circularly Polarized Patch Array Antenna for Mobile Satellite Communication", Technical Report A of The Institute of Electronics and Communication: P97-205, RCS97-243, MW97-188(1998-02), pp. 31-39.

Now an antenna beam scanning method of reading the table out of the memory circuit 42 and switching the phase shift amounts at the phase shifters 35-1∼35-4 by means of the switching circuit 43 to direct the antenna beam into a given direction will be explained. There are several antenna beam scanning methods. In the present invention, the data for attaining the predetermined antenna beam patterns is stored in the memory circuit 42 provided in the phase control circuit 39, and a level of the reception signal is always checked in accordance with the amplitude information of the AGC voltage generated by the variable gain amplifier processing the reception signal. When a level of the reception signal is decreased below a predetermined threshold level, the antenna beam scan is initiated. Alternatively, the antenna beam scan may be performed with a constant time interval regardless with a level of the reception signal.
A use may select one of these two methods.

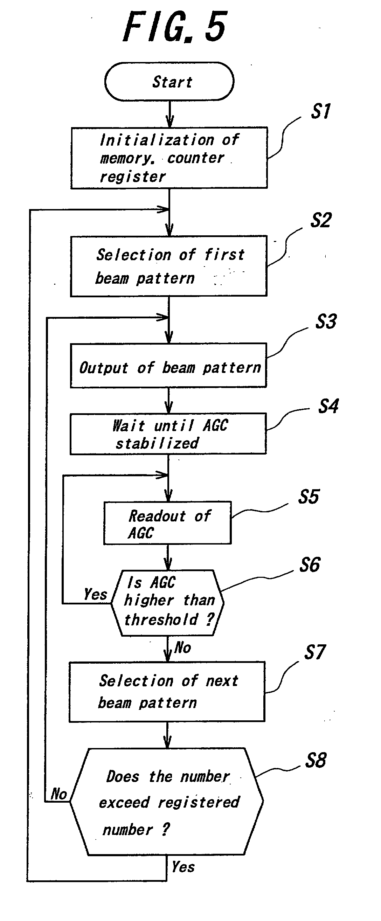

Fig. 5 is a flow chart showing successive process steps of the antenna beam scan. In a step S1, memories, counters and registers provided in the CPU 41 are initialized. Next, in a step S2, binary data representing phase shift amount data of a first antenna beam pattern P1 which directs the beam pattern in a direction A as shown in Fig. 4 is read out of the memory circuit 42, and the thus readout data is supplied to the CPU 41. The binary data for denoting a phase shift of 0° may be "0" and the binary data for representing a phase shift of 180 ° may be "1". The CPU 41 performs a necessary process in accordance with the binary data to generate the phase control signal to the switching circuit 43 to set phase shift amounts at the phase shifters 35-1∼35-4 to 0°, 180°, 0° and 0°, respectively.

By setting the phase shift amounts in the phase shifters 35-1∼35-4 as explained above, the antenna beam pattern P1 directed to the direction A can be obtained as shown by a step S3. In the present embodiment, a strength of the reception signal is checked from a level of the AGC voltage. A waiting time period of about 100 µs is required until the AGC voltage becomes stable after the antenna beam pattern is changed. Therefore, as illustrated in a step S4, after elapsing this stabilization time period of AGC voltage, the AGC voltage is readout in a step S5.

Next, in a step S6, it is judged weather or not the AGC voltage exceeds a predetermined threshold level. When the AGC voltage exceeds the threshold level, the process is returned to the step S5. Therefore, as long as the stable reception is performed, the antenna beam pattern is not changed and the directionality of the antenna is maintained as it is.

On the contrary, when it is judged in the step S6 that the AGC voltage does not exceed the threshold level, binary data of a next antenna beam pattern P2 is read out of the memory circuit 42 in a step S7. The number of the readout beam patterns is counted, and in a step S8 it is judged weather or not a count value exceeds a predetermined number. When a count value does not exceeds the predetermined number, the process is returned to the step S3 and the data of the antenna beam pattern P2 is generated. In this manner, the beam pattern data is successively read out until the AGC voltage exceeds the predetermined threshold value. When the AGC voltage exceeds the threshold level, the current antenna beam pattern is established. If the AGC voltage is decreased below the threshold level owing to any cause, the above explained process is initiated.

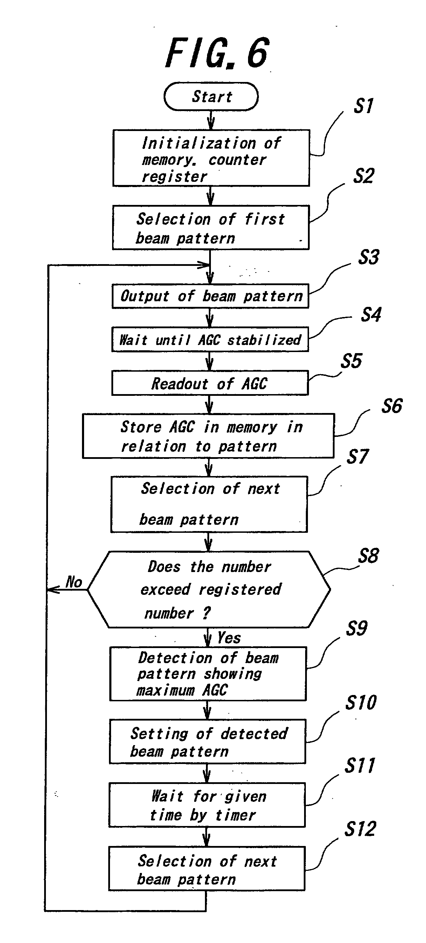

Fig. 6 is a flow chart representing another method of the antenna beam scan according to the invention. Steps S1to S5 after start are same as those shown in Fig. 5. That is to say, the data of the first beam pattern P1 stored in the memory circuit 42 is read out, phase shift amounts in the phase shifters 35-1∼35-4 are set this beam pattern P1, and after elapsing the stabilization time period of the AGC voltage, the AGC voltage is read out. In this embodiment, the this readout AGC voltage is stored in a memory of the CPU 42 with providing a relationship to the beam pattern P1 in a step S6.

Next, after selecting a next antenna beam pattern P2 in a step S7, it is checked in a step S8 weather or not the number of readout antenna beam patterns exceeds a predetermined number. When the number of antenna beam patterns does not exceed the threshold value, the process is returned to the step S3 and the antenna beam is set to the defined by the second antenna beam pattern P2. After the stabilization time period, the AGC voltage is read out and is stored in the memory.

Next, in a step S7, data corresponding to a third antenna beam pattern P3 is read out of the memory circuit 42, and the above explained process is carried out in accordance with the readout data and the AGC voltage obtained by the third antenna beam pattern P3 is stored in the memory. This process is repeated for all the five antenna beam patterns P1∼P5 stored in the memory circuit 42. After storing the AGC voltage obtained by the last antenna beam pattern P5, the number of the antenna beam patterns is judged to reach the predetermined number in the step S8, and then in a step S9, the AGC voltages stored in the memory are compared with each other, and an antenna beam pattern by means of which a maximum AGC voltage is attained is detected. Then, the antenna beam is set to the thus detected antenna beam pattern in a step S10.

After waiting for a predetermined time interval in a step S11, a next antenna beam pattern is selected in a step S12. This waiting time may be set by a timer. For instance, now it is assumed that the antenna beam pattern P3 is selected in the step S9, the antenna beam pattern P4 is selected in the step S12. After selecting the new antenna beam pattern in the manner mentioned above, the procedure is returned to the step S3, and phase shift amounts corresponding to the selected antenna beam pattern are provided with the phase shifters 35-1∼35-4 to direct the antenna beam into the direction D. After that, the steps from S4 to S8 are repeated to scan all the antenna beam patterns stored in the memory circuit 42. Then, a bean pattern by means of which a maximum AGC voltage is obtained is detected, and the thus detected antenna beam pattern is set for a predetermined time.

As explained above, in the embodiment illustrated in Fig. 6, the antenna beam can be directed to a desired direction in which a maximum strength of the received signal can be attained with a predetermined time interval. It should be noted that in this embodiment, after scanning all the antenna beam patterns stored in the memory circuit 42, a desired antenna beam pattern is determined. Therefore, there is a fear that the signal could not be received during the antenna beam pattern scanning. Suitable methods of scanning the antenna beam pattern may be selected in accordance with respective applications while not only the antenna portion, but also a whole system are taken in account.

In the antenna beam control system shown in Fig. 3, a portion surrounded by a chain line block, i.e. a circuit portion including the phase shifters 35-1∼35-4, combiner 36, CPU 41, memory circuit 42 and switching circuit 43, is formed by a single integrated circuit IC. Therefore, whole antenna beam control system is liable to be simple in construction and cheap in cost. It should be noted that according to the present invention, all the above mentioned circuit portions are not always formed as a single integrated circuit, and at least the phase shifters 35-1-35-4, combiner 36 and switching circuit 43 are preferably formed by a single integrated circuit.

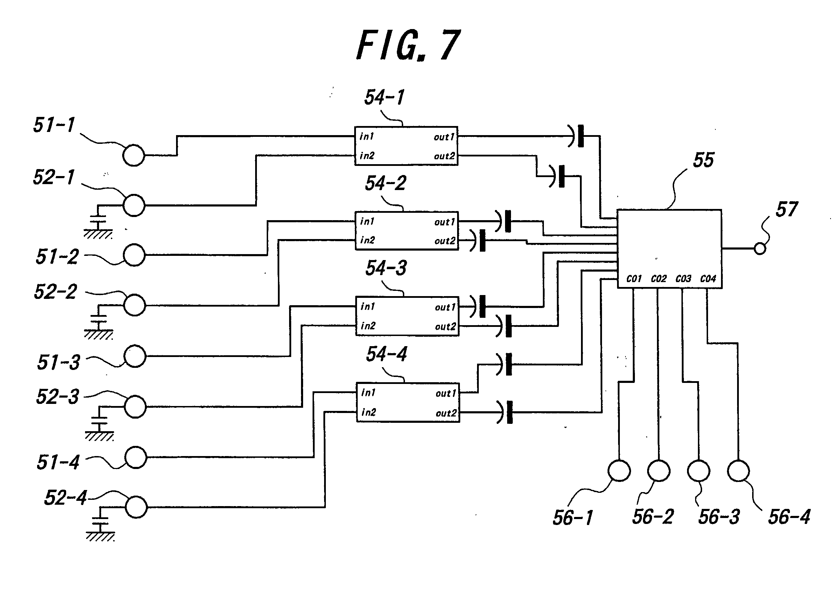

Fig. 7 is a circuit diagram showing an embodiment of the integrated circuit constructing the phase shifters 35-1∼35-4, combiner 36 and switching circuit 43 enclosed by a chain block in Fig. 3. In this embodiment, each of the phase shifters 35-1∼35-4 generates a signal having a same phase as that of the input signal and a signal having a phase-shifted by 180° with respect to that of the input signal. Either on of these two signals is selected by the switching circuit 43 in accordance with the phase control signal. To input terminals 51-1∼51-4 are supplied the intermediated frequency signals generated from the mixers 33-1∼33-4, respectively, These input terminals 51-1∼51-4 are connected to the phase shifting circuits 54-1∼54-4 together with input terminals 52-1∼52-4, respectively in a pair-wise manner, said input terminals 52-1∼52-4 being connected to the ground level via respective capacitors.

As stated above, each of the phase shifting circuits 54-1∼54-4 generates the 0° phase-shifted signal and the 180° phase-shifted signal of the intermediate frequency signal supplied to the first input terminals 51-1∼51-4, and supplies these signals at the output terminals. These 0° phase-shifted signal and the 180° phase-shifted signal of the intermediate frequency signal are supplied to a switching and combining circuit 55. In the present embodiment of the integrated circuit, there are provided input terminals 56-1∼56-4 which receive the phase control signals from the CPU 41, and these input terminals are connected to the switching and combining circuit 55. Either one of the 0° phase-shifted signal and the 180° phase-shifted signal of the intermediate frequency signal supplied from the first and second output terminals of the phase shifting circuits 54-1∼54-4 is selected in accordance with the phase control signals supplied to the input terminals 56-1∼56-4. Then, the selected intermediate frequency signals are combined in the switching and combining circuit 55 and the combined signal is supplied from an output terminal 57.

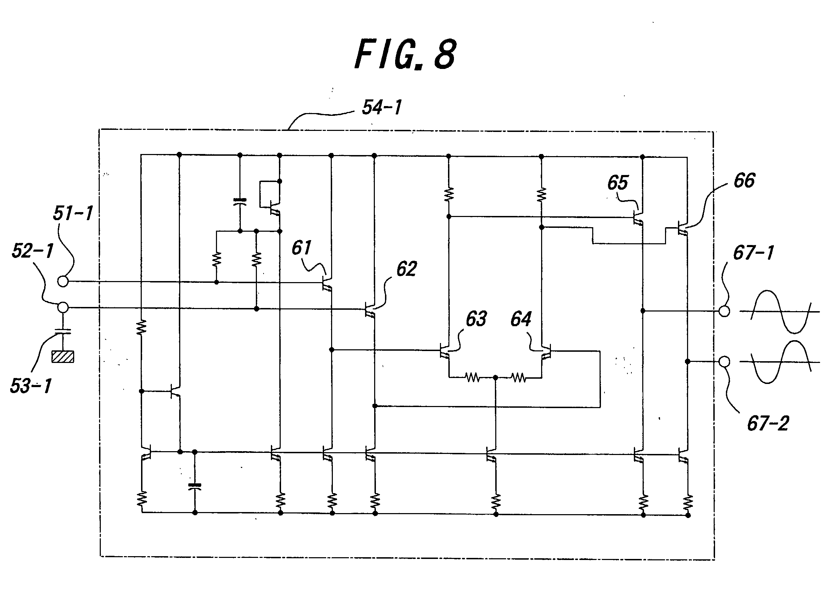

Fig. 8 is a circuit diagram showing a detailed structure of the phase shifting circuit 54-1 shown in Fig. 7. The remaining phase shifting circuits 54-2∼54-4 have the entirely same structure. In the phase shifting circuit 54-1, the intermediate frequency signal supplied to the input terminal 51-1 is fed to a base of a first emitter follower 61. The input terminal 51-2 is connected to a base of a second emitter follower 62. Emitters of these emitter followers 61 and 62 are connected to bases of transistors 63 and 64, respectively, said transistors being connected to construct a current mirror. A current flowing through the current mirror is determined by a current source and is always remained constant, and thus when a current flowing through one of the transistors 63 and 64 of the current mirror increases, a current passing through the other transistor is decreased. Therefore, voltages whose phases are opposed by 180° appear at collectors of these transistors 63 and 64. The collectors of the transistors 63 and 64 are connected to bases of emitter followers 65 and 66, respectively, and therefore at an output terminal 67-1 connected to an emitter of the emitter follower 65, there is generated a signal having a same phase of the intermediate frequency signal supplied to the input terminal 51-1, and at an output terminal 67-2 connected to an emitter of the emitter follower 66 there is generated a voltage having an opposite phase which is shifted by 180° with respect to that of the intermediate frequency signal supplied to the input terminal 51-1.

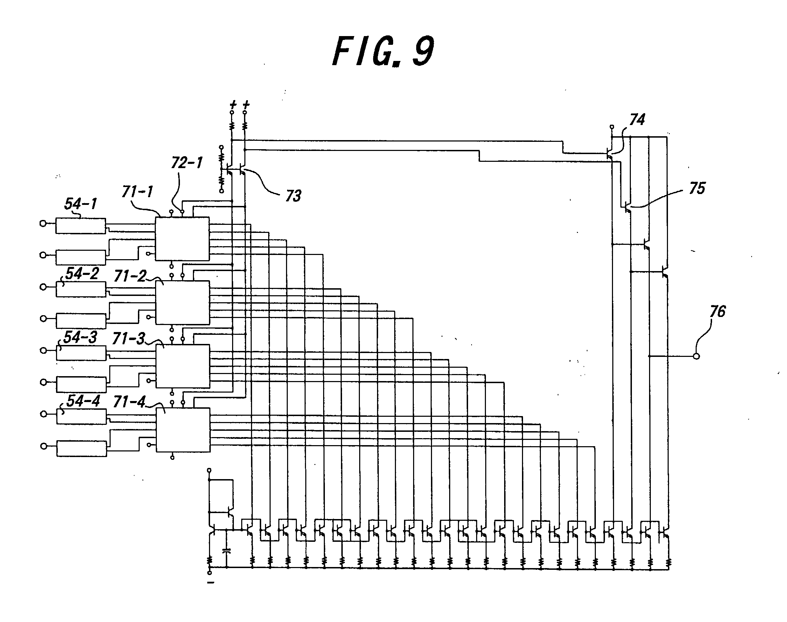

Fig. 9 is a circuit diagram illustrating a detailed structure of the switching and combining circuit 55 depicted in Fig. 7. The intermediate frequency signals with phases shifted by 0° and 180° generated from the phase shifting circuits 54-1∼54-4 are applied to switching circuits 71-1∼71-4, respectively. To these switching circuits 71-1∼71-4 are also supplied the phase control signals from the input terminals 56-1∼56-4 shown in Fig. 7, and either one of the 0° phase-shifted intermediate frequency signal and 180° phase-shifted intermediate frequency signal is applied to respective one of output terminals 72-1∼72-4. These output terminals 72-1∼72-4 are commonly connected to an emitter of a combining transistor 73. A collector of the combining transistor 73 is coupled with an output terminal 76 via transistors 74 and 75 which are connected in Darlington. In this manner, a combined signal of the intermediate frequency signals whose phase is shifted by an amount denoted by the phase control signal.

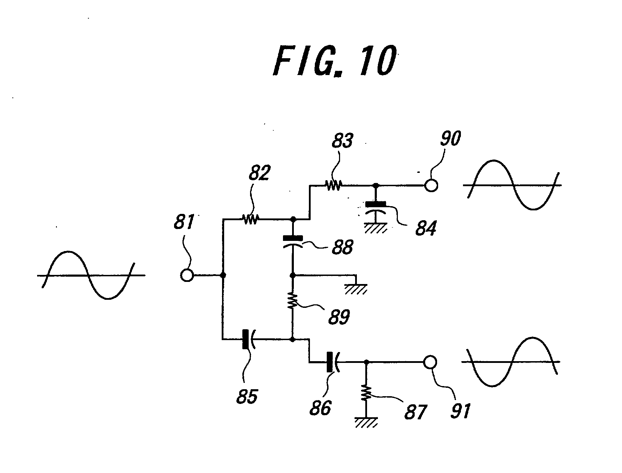

Fig. 10 is a circuit arrangement showing another embodiment of the phase shifting circuits 54-1∼54-4 shown in Fig. 7. In the above explained embodiment of the phase shifting circuit illustrated in Fig. 8, the 0° phase-shifted signal and 180° phase-shifted signal are obtained by means of the transistors. In the present embodiment, these 0° phase-shifted signal and 180° phase-shifted signal are generated using capacitors. An input terminal 81 is connected to the ground by means of resistors 82 and 83 and a capacitor 84 as well as by means of capacitors 85 and 86 and a resistor 87. A common junction point between the resistors 82 and 83 is connected to a common junction point between the capacitors 85 and 86 via a capacitor 88 and a resistor 89. Furthermore, a common junction between the capacitor 87 and the resistor 88 is connected to the ground. A phase of a signal is not inverted by a resistor, but a capacitor has a function for effecting a phase shift of 90°. Therefore, at an output terminal 90 connected to a common junction point between the resistor 83 and the capacitor 84, a signal having a same phase of the input signal applied to the input terminal 81, i.e. a 0° phase-shifted signal appears. At the same time, at an output 91 connected to a junction point between the capacitor 86 and the resistor 87 there is generated a 180° phase-shifted signal.

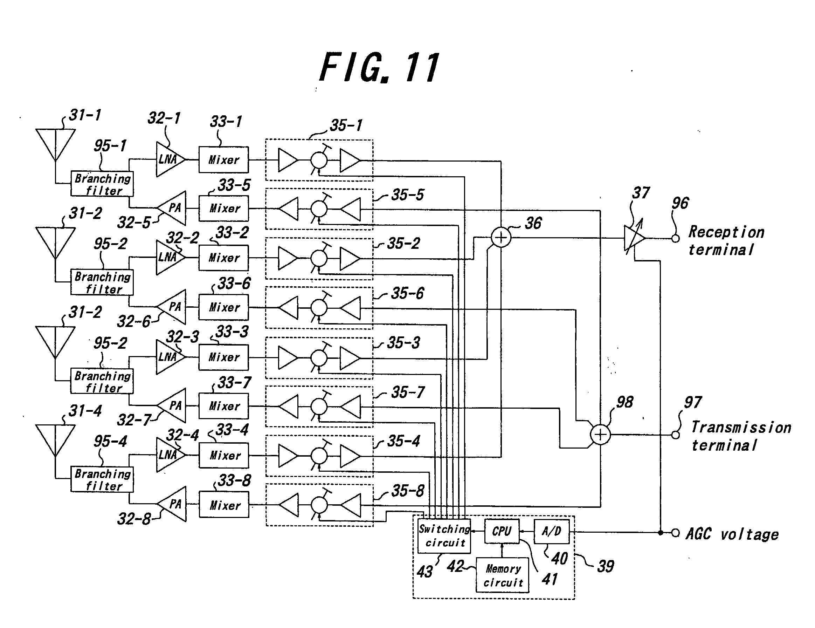

Fig. 11 is a block diagram showing an embodiment of the transceiver to which the antenna beam control system according to the invention is applied. Such a transceiver may be utilized as a terminal device of cellular phone system. In the present embodiment, a part of the transceiver is identical with that illustrated in Fig. 3, and portions similar to those shown in Fig. 3 are denoted by the same reference numerals used in Fig. 3 and their, detailed explanation is dispensed with. In the present embodiment, high frequency signals received by the antenna elements 31-1∼31-4 are supplied to the low noise amplifiers 32-1∼32-4 through branching filters 95-1∼95-4, respectively. Then, the amplified high frequency signals are supplied to the mixers 33-1∼33-4. Modulated intermediate frequency signals from these mixers 33-1∼33-4 are supplied to the receiving side phase shift circuits 35-1∼35-4, and output signals from the receiving side phase shift circuits are combined by the power combiner 36. The combined signal is then supplied to the variable gain amplifier 37 which generates a demodulated signal at an output terminal 96.

The AGC voltage generated by the variable gain amplifier 37 is converted into a digital signal by means of the A/D converter 40 provided in the phase control circuit 39, and the thus converted digital signal is supplied to the CPU 41. In the CPU 41, the antenna beam patterns previously stored in the memory circuit 42 are read out in accordance with a predetermined process, and binary phase control signals are generated. The thus generated binary phase control signals are supplied to receiving side phase shift circuits 35-1∼35-4 through the switching circuit 43 to select the phase-shifted signal of either 0° or 180°. In this manner, the antenna beam is directed to a direction defined by the thus readout antenna beam pattern.

Upon transmission, a modulated signal supplied at a transmitting terminal 97 is divided by a power divider 98 and divided signals are supplied to transmitting phase shift circuits 35-5∼35-8. Each of these transmitting side phase shift circuits 35-5∼35-8 has a same structure as respective one of the receiving side phase shift circuits 35-1∼35-4. Phase control signals similar to those supplied to the receiving side phase shift circuits 35-1∼35-4 are supplied to control terminals of the transmitting side phase shift circuits 35-5∼35-8 from the switching circuit 43. Therefore, when the receiving side phase shift circuit 35-1 gives a phase shift of 0°, the corresponding phase shift circuit 35-5 of transmitting side also provides a phase shift of 0°.

The transmission signals whose phases are shifted by 0° or 180° by the transmitting side phase shift circuits 35-5∼35-8 are supplied to the mixers 33-1∼33-4, respectively and are mixed with a carrier signal from a local oscillator to generate high frequency modulated signals. These high frequency modulated signals generated from the mixers 33-5∼33-8 are amplified by power amplifiers 32-5∼35-8, respectively, and are supplied to the antenna elements 31-1∼31-4 through branching filters 95-1∼95-4, respectively. In this manner, the high frequency modulated signals are emitted from the antenna elements 31-1∼31-4 as radiation. Also in the present embodiment, circuit portions encircled by chain lines may be constructed as a single IC chip.

As illustrated in Fig. 4, in the present embodiment, the four antenna elements 31-1∼31-4 are arranged at corners of a square and the directionality is realized by setting a phase shift amount in a phase shifting circuit corresponding to a single antenna element to 180°. Now simulation results of variation of the antenna beam pattern due to a change in a power supply phase at such a four element array antenna. In this simulation model, a frequency of a signal is set to 2.6425 GHz, a wavelength is set to 113.52 mm, a thickness of a substrate of antenna elements is set to 1,57 mm, εᵣ=3.28, tanδ=0.0025. Calculation is performed with an assumption that sizes of the substrate and ground plate are infinite.

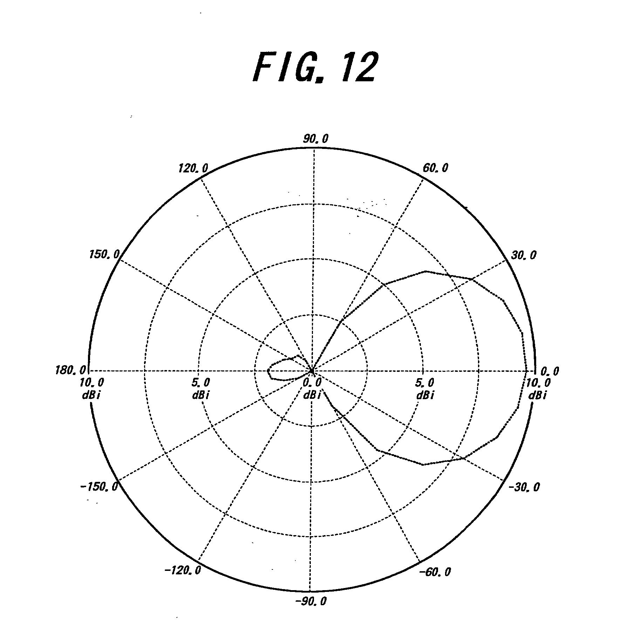

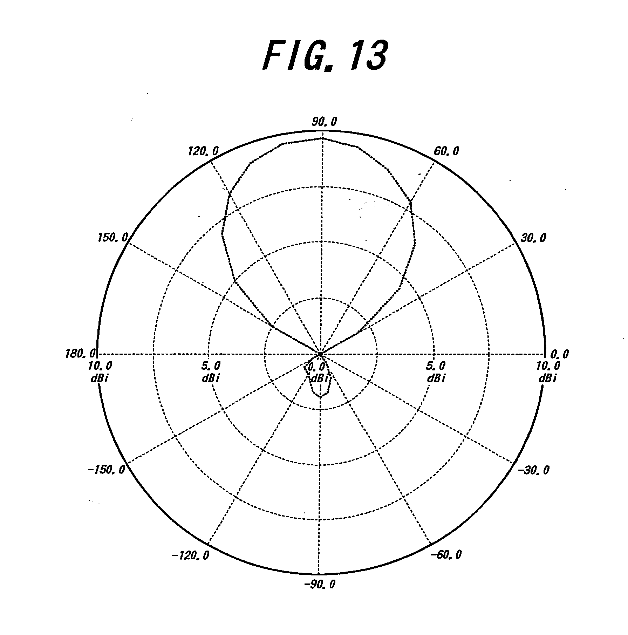

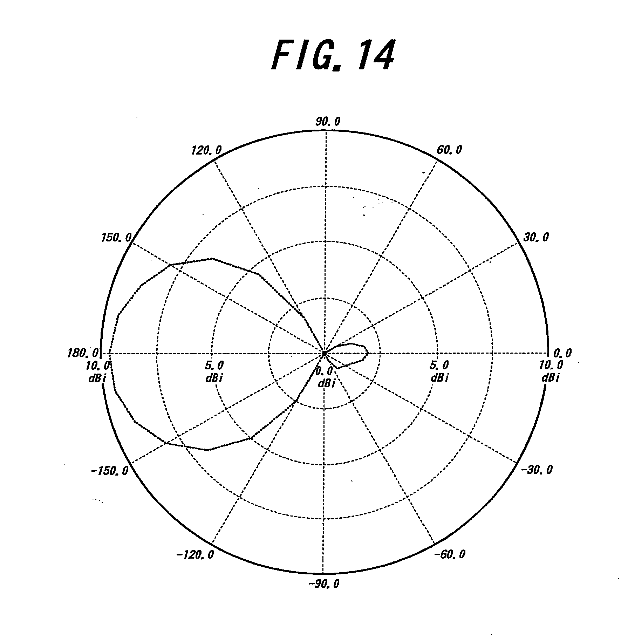

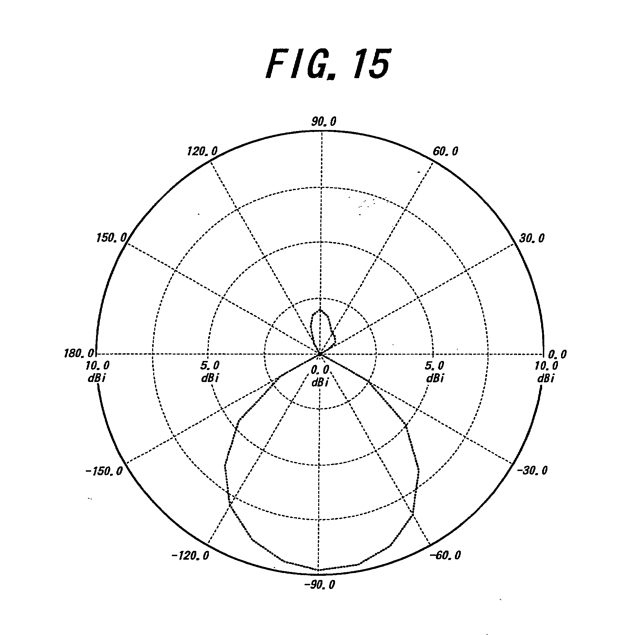

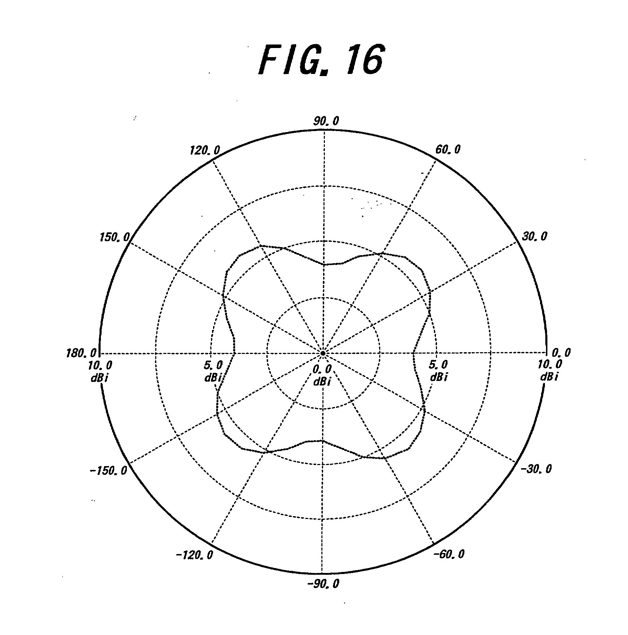

Figs. 12-15 are diagrams of antenna radiation patterns in which a phase of a power supplied to either one of the four antenna elements is shifted by 180° with respect to phase of power supply to the remaining three antenna elements as illustrated by the antenna beam patterns P1∼P4 shown in Fig. 4. On a horizontal plane, the peak of the antenna beam is shifted by 90°. Fig. 16 is diagram depicting the antenna radiation pattern which is obtained by setting the phase shift at all the antenna elements to 0° as shown by the antenna beam pattern P5. In this case, four peaks appear in mutually orthogonal four directions, i.e. at 45°, 135°, 225° and 315°. It should be noted that in these diagrams, |E| at θ=45° is plotted.

The present invention is not restricted to the embodiments explained above, but various alternations and modifications may be conceived within the scope of the invention. For instance, In the above mentioned embodiments, the four element patch-array antenna having four antenna elements arranged at respective corners of a square. However, according to the invention, any patched-array antenna with two or more than two antenna elements may be used. For instance, in case of using a two-element patched-array antenna, only two orthogonally opposing antenna elements are provided, and power supply phase of these antenna elements may be changed between 0° and 180°. Then, the directionality of the antenna beam directing in a line connecting the two antenna elements is obtained for the 180°phase shift and a directionality directing perpendicular to the line connecting the two antenna elements. In such an alternative embodiment, it is sufficient to provide a pair of low noise amplifiers, mixers, local oscillators and phase shifting circuits. Furthermore, data for the above mentioned two antenna beam patters may be stored in a memory circuit and any one of them may be read out of the memory circuit.

Moreover, it is also possible to use a three-element patched-array antenna. In this case, three antenna elements may be arranged at positions which are shifted by 120°. Then, there are obtained four antenna beam patterns, i.e. three directional antenna beam patterns performed by setting a phase of any one of the three antenna elements to 180° and a single non-directional antenna beam pattern which is attained by setting phase shifts of all the three antenna elements to 0°. Also in this modification, it is sufficient to provide only three sets of circuits elements such as mixers. Four sets of data for four antenna beam patterns may be stored in the memory circuit and the above explained scan may be carried out by successively reading the four sets of data from the memory circuit.

Furthermore, in embodiments of the present invention, nine-element antenna and sixteen-element antenna may be also used. In the above embodiment, the amplitude information of the received signal is derived from the AGC voltage, but according to the invention, it may be derived from another portion. Moreover, in the above mentioned embodiments, each of the phase shifting circuits 35-1∼35-8 for generating the 0° phase-shifted signal and 180° phase-shifted signal is constructed by the transistor circuit as illustrated in Fig. 8 and the CR circuit as shown in Fig. 10. However, according to the invention, the phase shifting circuit may be constructed by another circuit.

As explained above, in the antenna beam control system according to the invention, amounts of phase shift corresponding to respective antenna elements are set to either 0° or 180° in accordance with the antenna beam pattern data stored in the memory circuit to attain a desired antenna beam pattern. Therefore, the phase shift circuit may be constructed by the transistor circuit or CR circuit, and thus the phase shift circuit can be simple in structure and cheap in cost. Due to this fact, a circuit portion including the phase shift circuits, CPU, memory circuit and so on may be easily composed as a single integrated circuit chip. Then, the whole system can be small in size, and can be advantageously utilized in a terminal of cellular phone system.

## Claims

1. An antenna beam control system comprising:
a plurality of antenna elements (31-1∼31-4) receiving a signal;
a plurality of first signal processing circuits (33-1∼33-4) each of which is connected to respective one of said plurality of antenna elements;
a plurality of phase shift circuits (35-1∼35-4) each of which is connected to respective one of said plurality of first signal processing circuits for controlling phases of signals supplied from said first signal processing circuits;
a combiner (36) for combining signals supplied from said plurality of phase shift circuits;
a second signal processing circuit (38) for processing an output signal supplied from said combiner; and
a phase control circuit (39) for generating phase control signals for controlling phase shift amounts in said plurality of phase shift circuits in accordance with a strength of a signal processed in the second signal processing circuit such that an output signal from said combiner has a desired amplitude;
wherein at least four antenna elements are provided as said plurality of antenna elements, each of said plurality of the phase shift circuits includes a switching circuit for switching a phase of an input signal between 0° and 180° and said phase control circuit generates said phase control signals for switching phases of input signals of said phase shift circuits between 0° and 180°.

2. The antenna beam control system according to claim 1, wherein each of said phase control signals for changing phase shift amounts in the phase shift circuits between 0° and 180° are formed by a binary signal.

3. The antenna beam control system according to claim 2, wherein said phase control circuit (39) includes a memory circuit (42) storing at least five combinations of binary control signals by means of which five antenna beam patterns (P1∼P5) including four antenna beam patterns (P1∼P4) each of which is obtained by setting a phase shift amount of respective one of at least four phase shift circuits corresponding to said at least four antenna elements to 180° and setting phase shift amounts of the remaining phase shift circuits to 0° and one antenna beam pattern which is obtained by setting phase shift amounts of all the phase shift circuits corresponding to said at least four antenna elements to 0°, and phase shift amounts of said phase shift circuits are controlled by reading the combinations of binary signals stored in said memory circuit.

4. The antenna beam control system according to claim 3, wherein said at least five combinations of binary signals are successively read out of said memory circuit, a strength of a signal processed in said second signal processing circuit for respective one of said combinations of binary signals is detected and stored, a binary signal by means of which a strength of a signal processed in the second signal processing circuit becomes maximum is selected, and phase shift amounts in said phase shift circuit are controlled in accordance with the thus selected binary signal.

5. The antenna beam control system according to claim 4, wherein reading of said at least five combinations of binary signals out of said memory circuit is initiated when a strength of the signal supplied from said combining circuit becomes lower than a predetermined level.

6. The antenna beam control system according to claim 4, wherein reading of said at least five combinations of binary signals out of said memory circuit is performed periodically with a predetermined time interval.

7. The antenna beam control system according to claim 3, wherein said at least five combinations of binary signals are read out of said memory circuit in a predetermined order, one or more binary signals by means of which a strength of a signal processed in the second signal processing circuit exceeds a predetermined level are selected in accordance with a strength of a signal processed in said second signal processing circuit for respective one of said binary signals, and phase shift amounts in said phase shift circuit are controlled in accordance with the thus selected one or more binary signals.

8. The antenna beam control system according to claim 7, wherein the reading of said at least five combinations of binary signals out of said memory circuit is initiated when a strength of the signal supplied from said combiner becomes lower than a predetermined level.

9. The antenna beam control system according to claim 7, wherein the reading of the at least five combination is performed periodically with a predetermined time interval.

10. The antenna beam control system according to any preceding claim, wherein said second signal processing circuit comprises an automatic gain control circuit, and the information of strength of the signal processed in the second signal processing circuit is derived as an automatic gain control voltage generated in said automatic gain control circuit.

11. The antenna beam control system according to claim 10, wherein said at least five combinations of binary control signals are read out of said memory circuit, and phase shift amounts in the phase shift circuits are changed in accordance with the thus read out combinations of binary signals, a strength of the signal processed in the second signal processing circuit is judged after a time period during which said automatic gain control voltage reaches a stable condition.

12. The antenna beam control system according to any preceding claim, wherein each of said phase shift circuits is constructed to generate both a signal whose phase is identical with that of the input signal and a signal whose phase is inverted by 180° with respect to the input signal, and said switching circuit is constructed to select one of said in-phase signal and 180° inverted signal generated from said phase shift circuits.

13. The antenna beam control system according to claim 12, wherein each of said phase shift circuits is constructed by a transistor circuit.

14. The antenna beam control system according to claim 12, wherein each of said phase shift circuits is constructed by resistors and capacitors.

15. The antenna beam control system according to any preceding claim, wherein said antenna elements receive a high frequency modulation signal, said first signal processing circuit comprises a mixer for converting said high frequency modulation signal received by said antenna elements into an intermediate frequency modulation signal which is supplied to the phase shift circuit, and said second signal processing circuit comprises a demodulation circuit for demodulating the intermediate frequency modulation signal generated from said combiner.

16. The antenna beam control system according to claim 15, wherein the information of signal strength for generating the phase control signal is derived from an automatic gain control signal produced in said demodulation circuit.

17. The antenna beam control system according to any preceding claim, wherein each of said plurality of antenna elements is connected to respective one of a plurality of branching filters, each of output terminals of the branching filters is connected respective one of said first signal processing circuits, each of reception signals generated by said first signal processing circuits is supplied to respective one of a plurality of receiving phase shift circuits, after distributing a transmission signal by a power distributor, a plurality of distributed transmission signals are supplied to a plurality of transmitting side phase shift circuits which correspond to said plurality of receiving side phase shift circuits and are controlled by same phase control signals as those for the receiving side phase shift circuits, output signals from these transmitting side phase shift circuits are supplied, via third signal processing circuits, to input terminals of said branching filters and are transmitted from said plurality of antenna elements.

18. The antenna beam control system according to claim 17, wherein said first and third signal processing circuits comprise mixers.

19. The antenna beam control system according to any preceding claim, wherein said phase shift circuits and a part of said phase control circuit are formed as an integrated circuit chip.

20. An antenna beam control system comprising:
a plurality of antenna elements (31-1∼31-4) receiving a signal;
a plurality of first signal processing circuits (33-1∼33-4) each of which is connected to respective one of said plurality of antenna elements;
a plurality of phase shift circuits (35-1∼35-4) each of which is connected to respective one of said plurality of first signal processing circuits for controlling phases of signals supplied from said first signal processing circuits;
a combiner (36) for combining signals supplied from said plurality of phase shift circuits;
a second signal processing circuit (38) for processing an output signal supplied from said combiner; and
a phase control circuit (39) for generating phase control signals for controlling phase shift amounts in said plurality of phase shift circuits in accordance with a strength of a signal processed in the second signal processing circuit such that an output signal from said combiner has a desired amplitude;
wherein at least two antenna elements are provided as said plurality of antenna elements, each of said plurality of the phase shift circuits is constructed to change a phase of an input signal between 0° and 180°, and said phase control circuit generates said phase control signals for switching phases of input signals of said phase shift circuits between 0° and 180°.

21. The antenna beam control system according to claim 20, wherein each of said phase control signals is formed by a binary signal.
